# FASCICULE DE BREVET EUROPEEN

(11) **EP 3 475 749 B1**
(45) Date de publication et mention de la délivrance du brevet: **30.09.2020**
(21) Numéro de dépôt: 17740445.6
(22) Date de dépôt: 22.06.2017
(51) Int. Cl.: G02B 21/00, G02B 21/24

(54) **MICROSCOPE**
MIKROSKOP
MICROSCOPE

(30) Priorité: 23.06.2016 FR 1655888
(43) Date de publication de la demande: 01.05.2019
(73) Titulaire: Bertin Technologies, 78180 Montigny-le-Bretonneux (FR)
(72) Inventeur: BRYGO, François, 13350 Charleval (FR); ANTHOINE, David, 13840 Rognes (FR)
(74) Mandataire: Decobert, Jean-Pascal
(86) Numéro de dépôt international: PCT/FR2017/051672
(87) Numéro de publication internationale: WO 2017/220943

(56) Documents cités:
- WO-A1-2016/026926
- WO-A2-2008/022139
- US-A1- 2013 021 665

## Description

La présente invention se rapporte à un microscope d'observation d'un échantillon, notamment un microscope à fluorescence.

Un microscope à fluorescence permet l'étude des propriétés organique et inorganiques d'un échantillon en utilisant la fluorescence émise par l'échantillon au lieu de la lumière réfléchie ou absorbée par l'échantillon. La fluorescence est basée sur le principe de l'émission spontanée par l'échantillon d'une lumière à une longueur d'onde particulière suite à l'excitation dudit échantillon à une longueur d'onde spécifique. L'échantillon peut être naturellement fluorescent ou bien être traités avec des composés spécifiques, appelés fluorophores.

Classiquement, un microscope à fluorescence comprend des moyens d'éclairage aptes à émettre un faisceau de lumière vers un objectif puis vers un échantillon. Des moyens de filtrage sont généralement intercalés dans le trajet optique entre les moyens d'éclairage et l'objectif et dans le trajet optique de la lumière provenant de l'échantillon et avant réception par des moyens d'observation.

Dans la technique connue, de nombreux agencements ont été proposés pour positionner les moyens de filtrage, les objectifs et les moyens d'éclairage relativement les uns aux autres. Toutefois, aucun des agencements proposés n'est satisfaisant en termes de précision et de fiabilité d'utilisation à long terme.

Dans une configuration particulière décrite dans le document WO2008/022139, il a été proposé d'agencer les moyens d'éclairage et les moyens de filtrage dans des modules mobiles. Ces modules sont prévus pour être amenés en position active d'utilisation pour l'analyse d'un échantillon. Ce type de montage impose une alimentation électrique des moyens d'éclairage de l'organe mobile qui peut s'avérer compliqué à réaliser.

US2013/0021665A1 décrit un microscope comprenant une première tourelle portant un objectif et une seconde tourelle portant une pluralité de modules de filtrage, la première tourelle et la seconde tourelle étant portées par différent pivots.

L'invention a notamment pour but d'apporter une solution simple, efficace et économique aux problèmes de l'art antérieur décrit précédemment.

A cet effet, elle propose un microscope pour l'observation d'un échantillon comprenant une première tourelle portant une pluralité d'objectifs et une seconde tourelle portant une pluralité de modules de filtrage, la première tourelle et la seconde tourelle étant portées par un même pivot fixe et montées à rotation, indépendamment l'une de l'autre, autour de ce pivot, chaque objectif de la première tourelle et chaque module de filtrage de la seconde tourelle étant aptes à être agencé par rotation de la première tourelle et de la seconde tourelle dans une position active d'utilisation dans laquelle un module de la seconde tourelle est intercalé dans le trajet optique entre un objectif de la première tourelle et un détecteur.

Selon l'invention les objectifs de grandissement sont montés en rotation sur un même pivot que celui portant les modules de filtrage ce qui permet de garantir une meilleure précision au positionnement des modules de filtrage et des objectifs en position active, en supprimant les imprécisions dues à l'utilisation de support fixes indépendant l'un de l'autre.

Au surplus, l'utilisation d'un même pivot permet de garantir un maintien de la précision au regard des chocs externes lesquels impactent de la même façon la première tourelle et la seconde tourelle.

Dans une réalisation particulière de l'invention, le pivot est incliné en oblique par rapport à la verticale en position d'utilisation du microscope.

Préférentiellement, la seconde tourelle est agencée en-dessous de la première tourelle. Une table porte-échantillon est avantageusement disposée au-dessus de la première tourelle.

Selon une caractéristique de l'invention, chaque tourelle est guidée en rotation autour du pivot par deux paliers à roulements portés par le pivot.

Egalement, la seconde tourelle peut comprendre un plateau de support des modules de filtrage monté autour des premier et second paliers de la seconde tourelle, la première tourelle pouvant aussi comprendre un plateau de support des objectifs fixé sur un anneau entourant les premier et second paliers associés.

Selon une caractéristique de l'invention, chaque module de filtrage comprend un boîtier comportant une première ouverture et une seconde ouverture de sorte que la lumière émise par l'échantillon traverse la première ouverture puis la seconde ouverture, le boîtier de chaque module de filtrage portant un filtre dichroïque agencé dans la première ouverture et adapté pour réfléchir la lumière émise par des moyens d'éclairage vers un objectif et permettre à la lumière d'une longueur d'onde prédéterminée de passer au travers du filtre dichroïque.

Afin d'éliminer la longueur d'onde d'excitation de la lumière provenant de l'échantillon, chaque module de filtrage peut ainsi comprendre un filtre d'émission apte à rejeter la longueur d'onde de la source de lumière, ce filtre d'émission étant disposé dans la seconde ouverture. En pratique, ce filtre d'émission est un filtre passe-bande très sélectif.

Selon l'invention, le microscope comprend des moyens fixes d'éclairage aptes à émettre un faisceau de lumière d'éclairage de l'échantillon selon un chemin optique donné. Ces moyens d'éclairage peuvent être formés par une pluralité de modules d'éclairage qui sont fixes et qui sont configurés pour émettre des faisceaux de lumière dont les longueurs d'ondes sont différentes deux à deux.

A la différence de la technique antérieure, les fonctions d'éclairage et de filtrage sont découplées ce qui facilite les opérations de maintenance. De plus, l'utilisation de moyens d'éclairage fixes permet de les raccorder de manière simple à une alimentation électrique ainsi que de les positionner simplement. On comprend aisément que la combinaison de moyens d'éclairage fixes avec des moyens de filtrage mobiles comme décrit ci-dessus, peut être réalisé sans que la première tourelle et la seconde tourelle soient nécessairement portées par un même pivot.

Selon une autre caractéristique de l'invention, chaque module d'éclairage est associé en fonctionnement à un unique module de filtrage, un module d'éclairage et le module de filtrage associé étant positionnés l'un par rapport à l'autre de manière à ce que le faisceau dudit module d'éclairage soit renvoyé par le filtre dichroïque dudit module de filtrage vers un objectif de la première tourelle, lorsque ledit module de filtrage et l'objectif sont dans une position active.

Cet agencement permet de faire coopérer un module d'éclairage avec un module de filtrage dans le cadre d'un fonctionnement en fluorescence du microscope.

On comprend aisément que les filtres dichroïques des modules de filtrage, devant renvoyer la lumière d'excitation vers un objectif, ne sont pas positionnés de manière identique sur la seconde tourelle par rapport au pivot puisque les modules d'éclairage sont fixes.

Selon une caractéristique de l'invention, les modules d'éclairage sont positionnés sur une platine en forme d'arc de cercle et qui est solidaire d'un bâti du microscope.

Selon une autre caractéristique de l'invention, la seconde tourelle peut être commandée en rotation par des moyens motorisés actionnés par des moyens de commande de la mise en position active d'un module de filtrage, ces moyens de commande étant aptes à mettre en fonctionnement un module d'éclairage donné.

Une molette rotative peut être couplée en rotation à la première tourelle, par exemple par une courroie de transmission. Ainsi, l'utilisateur peut positionner l'objectif souhaité dans une position active au moyen de la molette, celle-ci étant directement accessible à un utilisateur.

Pour faciliter une opération de maintenance ou encore faciliter l'utilisation du microscope, chaque module de filtrage peut être monté de manière amovible sur la seconde tourelle.

Le présent document concerne également un module d'éclairage destiné notamment à être utilisé avec le microscope tel que décrit ci-dessus et comprenant un corps tubulaire comportant une source de lumière, du type à semi-conducteurs, à une première extrémité et une lentille engagée depuis une seconde extrémité opposée à la première extrémité sur un épaulement annulaire interne du corps, un support de filtre étant serré sur la lentille par un organe élastique précontraint axialement et bloqué axialement par un anneau d'arrêt de la seconde extrémité du corps.

Dans cette configuration du module d'éclairage, le support du filtre est directement bloqué par un organe élastique serré sur la lentille par un anneau d'arrêt axial. Cet assemblage s'avère simple et rapide à réaliser et ne nécessite que peu de manipulations. De plus, lorsqu'une maintenance doit être effectuée sur la lentille, celle-ci peut être aisément remplacée en retirant préalablement l'organe élastique puis le support de filtre. Ce démontage n'impacte pas la source de lumière qui reste positionnée à la première extrémité du corps tubulaire.

Enfin, le positionnement de la lentille sur un épaulement annulaire du corps tubulaire permet un positionnement axial précis de la lentille relativement à la source d'éclairage, l'épaulement d'appui de la lentille étant à une distance invariante de la source de lumière.

Selon une autre caractéristique, le support comprend un segment annulaire formant une entretoise serrée entre une face convexe de la lentille et l'organe élastique.

Ce montage permet de serrer l'entretoise supportant le filtre par un organe élastique qui est appliqué sur l'entretoise, l'entretoise étant appliquée axialement sur la lentille, ce qui ne nécessite pas de vissage et donc évite un mouvement de rotation qui pourrait rayer la surface de la lentille. De plus, ce montage limite le nombre de pièces nécessaires à la fixation de la lentille et du filtre dans le corps tubulaire, permettant d'obtenir un module d'éclairage très compact.

Egalement, cette limitation du nombre de pièces permet de plus facilement respecter le positionnement axial de la source de lumière, de la lentille et du filtre les uns par rapport aux autres.

Préférentiellement, le segment annulaire est relié à une jupe cylindrique s'étendant en aval de la lentille, entourée par l'anneau d'arrêt et portant un filtre passe bande à son extrémité opposée à la lentille.

Le montage du filtre sur une jupe cylindrique entourée par un organe élastique de maintien de l'entretoise du support et par l'anneau d'arrêt de l'organe élastique permet d'assembler les différents éléments du module d'éclairage de manière simple et rapide tout en garantissant une compacité optimale du module d'éclairage.

Selon encore une autre caractéristique, un diaphragme est intercalé entre la source de lumière et la lentille et est réalisé d'une seule pièce avec le corps.

L'ouverture du diaphragme peut présenter une section s'évasant vers la seconde extrémité du corps, de préférence tronconique. Une telle section de l'ouverture, augmentant continuellement vers l'aval, permet de limiter les réflexions de lumière sur la face interne de l'ouverture du diaphragme. Elle permet également un positionnement plus précis du diaphragme relativement à la source d'éclairage et à l'axe optique de la lentille.

La périphérie radialement externe de la lentille peut être engagée dans une gorge tronconique à section s'évasant vers la première extrémité du corps, de manière à réduire les contraintes mécaniques appliquées à la périphérie externe de la lentille.

Dans une réalisation pratique, l'épaulement annulaire sépare une première partie amont de corps logeant le diaphragme d'une seconde partie aval de corps logeant la lentille, le support de filtre, l'organe élastique et l'anneau d'arrêt.

L'invention sera mieux comprise et d'autres détails, avantages et caractéristiques de l'invention apparaîtront à la lecture de la description suivante faite à titre d'exemple non limitatif, en référence aux dessins annexés dans lesquels :
- la figure 1 est une vue schématique en perspective du dessus du microscope selon l'invention, les moyens de capotage étant en vue éclatée ;
- la figure 2 est une vue schématique en perspective, de côté et de l'avant, de l'intérieur du microscope selon l'invention ;
- la figure 3 est une vue similaire à celle de la figure 2, depuis l'arrière et du dessus ;
- la figure 4 est une vue schématique en coupe du microscope selon l'invention, selon un plan vertical s'étendant d'avant en arrière et contenant le pivot ;
- la figure 5 est une vue à plus grande échelle de la zone délimitée en pointillée sur la figure 4 ;
- la figure 6 est une vue schématique en perspective de la première tourelle et de son mécanisme d'entrainement en rotation autour du pivot ;
- la figure 7 est une vue schématique de l'indexation de la première tourelle autour du pivot ;
- la figures 8 est une vue schématique en perspective de la première tourelle et de la seconde tourelle avec le mécanisme d'entrainement de la seconde tourelle ;
- la figure 9 est une vue schématique en perspective de la seconde tourelle seule et de son mécanisme d'entrainement autour du pivot ;
- la figure 10 est une vue schématique en perspective isolée de la seconde tourelle ;
- la figure 11A est une vue schématique en coupe isolée d'un module de filtrage ;
- la figure 11B est une vue schématique en perspective d'un module de filtrage ;
- la figure 12 est une vue schématique en perspective des moyens d'éclairage ;
- la figure 13 est une vue schématique en perspective et en coupe d'un module d'éclairage selon l'invention ;
- la figure 14 est une vue schématique d'une rondelle élastique intégrée au module d'éclairage de la figure 13.

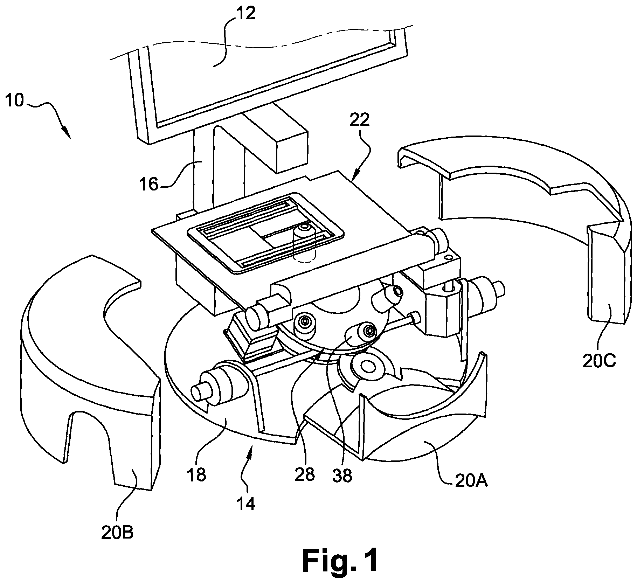

On se réfère tout d'abord à la figure 1 qui représente un exemple de réalisation du microscope 10 selon l'invention, ce microscope10 étant par exemple destiné à l'observation de la fluorescence d'un échantillon ou encore à l'observation en lumière transmise, éventuellement par contraste de phase de l'échantillon.

Comme représenté sur la figure 1, le microscope 10 comprend essentiellement :
- un écran tactile 12 d'affichage et de saisie de données par un opérateur ou utilisateur ;
- un bâti 14 de support de l'écran, comprenant un bras 16 ou mat portant l'écran 12 et relié à une extrémité opposée à l'écran à une base 18 sensiblement plane ;
- des moyens de capotage 20A, 20B, 20C portés par le bâti 14 et logeant un mécanisme de positionnement d'objectifs et de filtres, des moyens d'éclairage, des moyens motorisés, un détecteur 21 ainsi que des moyens de commande des moyens d'éclairage et des moyens motorisés ;
- une table 22 porte-échantillon pourvu de moyens de déplacement de l'échantillon sur la table, cette table 22 étant agencé au-dessus des éléments de capotage 20A, 20B, 20C.

Le microscope 10 peut comprendre des moyens de réglage de la planéité/stabilité de la base 18 du bâti 14, ces moyens comportant, par exemple, des tiges filetées 24 dont une extrémité est vissée dans la base 18 et une extrémité opposée comprend un disque 26 de support, la profondeur de vissage de chacune des tiges filetées 24 permettant d'ajuster la distance de la base aux disques 26 pour régler la planéité de la base et donc du bâti 14 du microscope 10.

Les moyens de capotage comprennent trois éléments distincts 20A, 20B, 20C, un premier élément latéral 20B, un second élément latéral 20C et un élément de capotage avant 20A, c'est-à-dire agencé en vis-à-vis d'un opérateur lorsque celui-ci utilise le microscope 10. Le capotage 20A avant est amovible par l'utilisateur afin de permettre un accès aux objectifs comme cela apparaitra plus clairement dans la suite de la description.

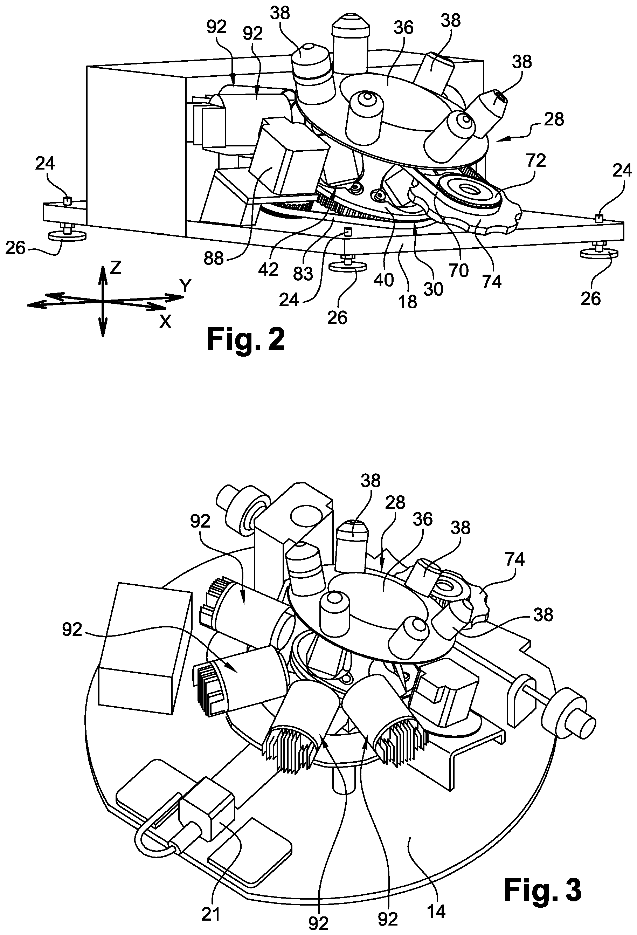

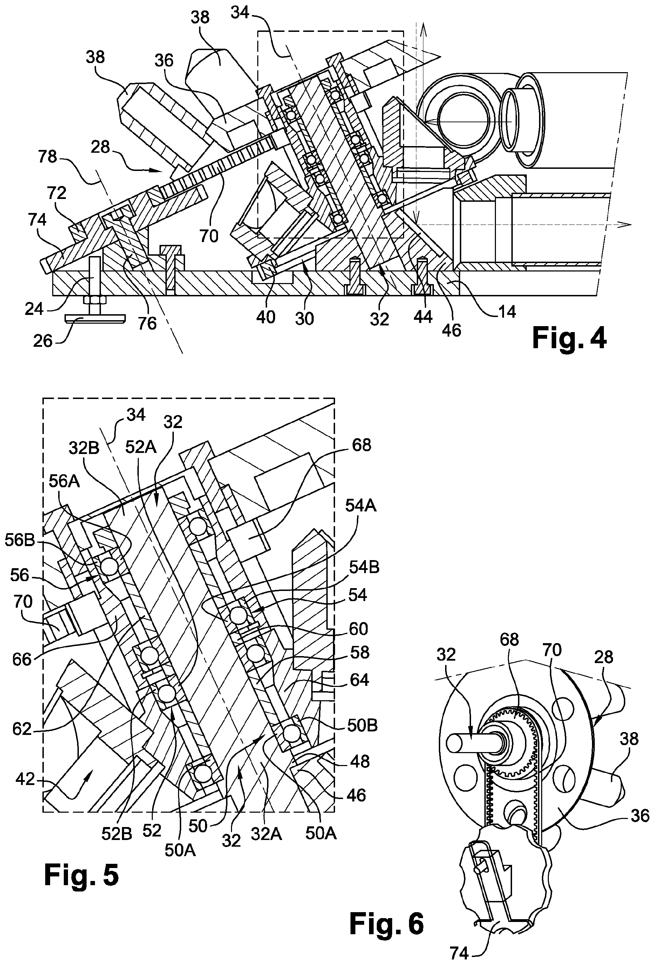

Le mécanisme de positionnement des objectifs et des filtres comprend une première tourelle 28 et une seconde tourelle 30 portées par un même pivot fixe 32 et montées en rotation autour de ce pivot 32 (figures 4 à 9). Chacune des première 28 et seconde 30 tourelles est apte à tourner indépendamment l'une de l'autre autour du pivot. Comme cela est visible, le pivot 32 est formé par une barre et est incliné en oblique par rapport à la verticale. Plus précisément, selon les trois directions orthogonales X, Y et Z de l'espace (figure 2), l'axe 34 du pivot 32 est contenu dans le plan XZ, c'est-à-dire un plan s'étendant d'avant en arrière, et sa normale dans le plan XZ qui est orientée vers l'avant est dirigée du haut vers le bas. L'axe 34 du pivot 32 peut être incliné d'un angle compris entre 5 et 60°, de préférence 30° par rapport à l'axe vertical ou axe Z. Cet angle est choisi pour permettre un accès simple aux objectifs de la première tourelle 28 par retrait de l'élément de capotage ou capot 20A. On comprend aisément que la base 18 du bâti 14 s'étend dans le plan XY lorsque le microscope 10 est en position d'utilisation.

Il est noté que l'axe de la première tourelle 28 et l'axe de la seconde tourelle 30 sont confondus en position de montage avec l'axe 34 du pivot 32 de sorte que la même référence est appliquée.

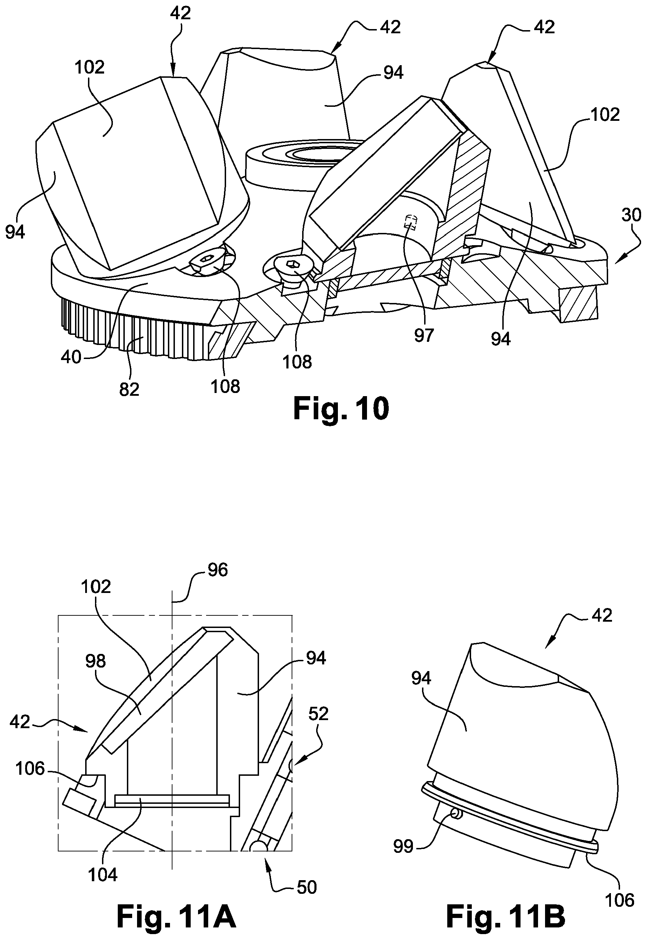

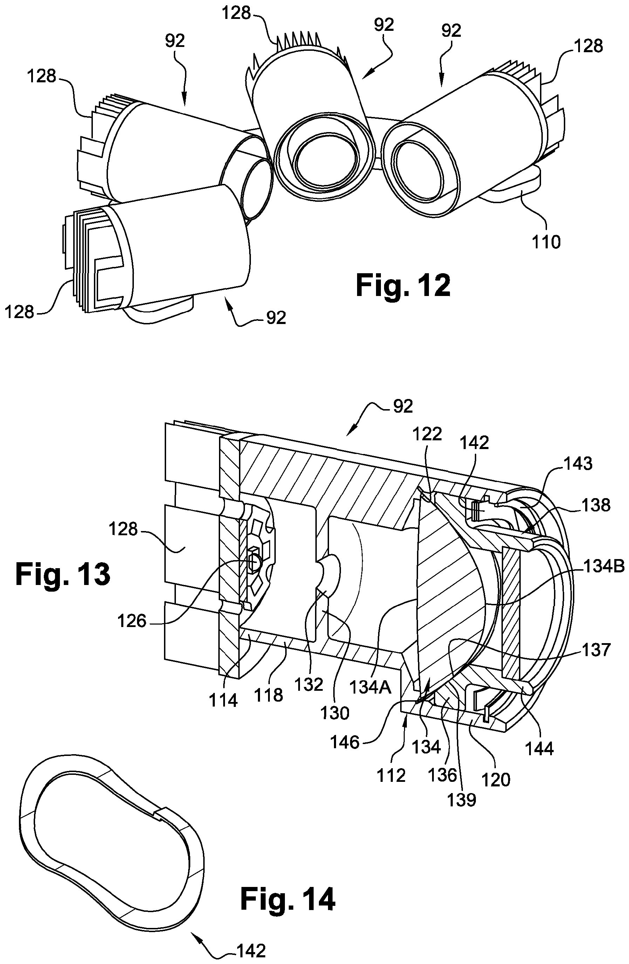

Comme représenté plus particulièrement sur les figures 2 et 4, la seconde tourelle 30 est agencée en dessous de la première tourelle 28 de sorte que la première tourelle 28 peut être qualifiée de tourelle supérieure et la seconde tourelle 30 peut être qualifiée de tourelle inférieure. La première tourelle 30 comprend un plateau 36 comportant des ouvertures régulièrement réparties autour de l'axe 34 de la première tourelle 28 et dans lesquels sont engagés des objectifs 38 de grandissement/focalisation. La seconde tourelle 30 comprend également un plateau 40 comportant des ouvertures régulièrement réparties autour de l'axe 34 de la seconde tourelle 30 et dans lesquels sont engagés des modules de filtrage 42. Le positionnement particulier des modules de filtrage 42 apparaitra plus clairement dans la suite de la description en référence aux figures 10 et 12.

Comme cela est représenté sur la figure 4, chaque module de filtrage 42 et chaque objectif est apte à être amené dans une position active dans laquelle un module de filtrage 42 est intercalé dans le trajet optique entre un objectif 38 de la première tourelle 28 et une surface optiquement réfléchissante 44 porté par un socle 46.

Le pivot 32 comprend deux extrémités inférieure 32A et supérieure 32B. L'extrémité inférieure 32A du pivot 32 est engagée et fixée dans un orifice du socle 46 solidaire de la base 18 du bâti14 (figures 4 et 5). Le pivot 32 comprend une nervure annulaire 48 formant une butée d'insertion de l'extrémité inférieure 32A du pivot 32 dans le socle 46.

La première tourelle 28 et la seconde tourelle 30 sont chacune guidée en rotation par un premier 50, 54 et un second 52, 56 paliers de roulements, plus particulièrement de roulements à billes. Chacun des paliers 50, 52, 54, 56 comprend une bague annulaire interne 50A, 52A, 54A, 56A solidaire du pivot fixe 32 et une bague annulaire externe 50B, 52B, 54B, 56B destinée à tourner avec une tourelle 28, 30. Le premier palier 50 de la tourelle inférieure 30 est porté par l'intermédiaire de sa bague interne 50A par la nervure annulaire 48 et est espacé de la bague interne 52A du second palier 52 par une entretoise 58 annulaire interne appliquée sur le pivot 32 et séparant les bagues annulaires internes 50A, 52A des premier et second paliers 50, 52 de la tourelle inférieure 30. Une cale 60 annulaire est intercalée entre le second palier 52 de la seconde tourelle 30 et le premier palier 54 de la première tourelle 28. Plus précisément, cette cale 60 est en contact avec les bagues internes 52A, 54A des paliers 52, 54 uniquement. Une autre entretoise 62 annulaire interne est intercalée entre les bagues 54A, 56A du premier palier 54 et du second palier 56 de la première tourelle 28 ou tourelle supérieure.

Plus précisément, le plateau 40 de la tourelle inférieure 30 comprend une ouverture centrale permettant le montage du plateau 40 autour du pivot 32. Le bord périphérique 64 radialement interne du plateau 40, délimitant l'ouverture centrale, est monté en butée sur la bague annulaire externe 50A du premier palier 50 de la première tourelle 30, en direction du socle 48 et l'extrémité supérieure dudit bord périphérique 64 est agencée avec un jeu axial en regard de l'extrémité inférieure d'un anneau 66 entourant le premier 54 et le second 56 paliers de la tourelle supérieure 28. Le bord périphérique interne 64 du plateau 40 de la tourelle inférieure 30 est rendu solidaire en rotation des bagues externes 50A, 52A des premier et second paliers 50, 52 de la seconde tourelle 30 et l'anneau 66 est rendu solidaire en rotation des bagues externes 54A, 56A des premier 54 et second 56 paliers de la première tourelle 28. Le plateau 36 de la tourelle supérieure 28 est fixé par vissage sur l'extrémité annulaire supérieure de l'anneau 66.

Ainsi, en fonctionnement, la première tourelle 28 peut tourner indépendamment de la seconde tourelle 30, mais reste solidaire axialement de celle-ci, c'est-à-dire le long de l'axe 34 du pivot 32.

Le positionnement en rotation de chacune de la première tourelle 28 et de la seconde tourelle 30, réalisé sur un même pivot 32 fixe, permet de garantir un bon positionnement relatif entre les modules de filtrage 42 et les objectifs 38. Egalement, les éventuels chocs sur le bâti 14 du microscope 10 n'induisent pas de désalignement des objectifs 38 relativement aux modules de filtrage 42.

Comme cela est visible sur les figures 4 à 6, une roue crantée 68 est montée autour et couplé en rotation avec l'anneau 66 de support du plateau 36 de la tourelle supérieure 28. Cette roue crantée 68 est en prise avec une courroie 70 de transmission également en prise avec une autre roue crantée 72 d'une molette 74 portée en rotation sur un pion 76 solidaire du bâti 14. Ce pion 76 s'étend selon un axe 78 sensiblement parallèle à l'axe du pivot 32. La molette 74 est prévue pour être accessible depuis l'extérieur du microscope lorsque les éléments de capotage sont en position sur le châssis 14.

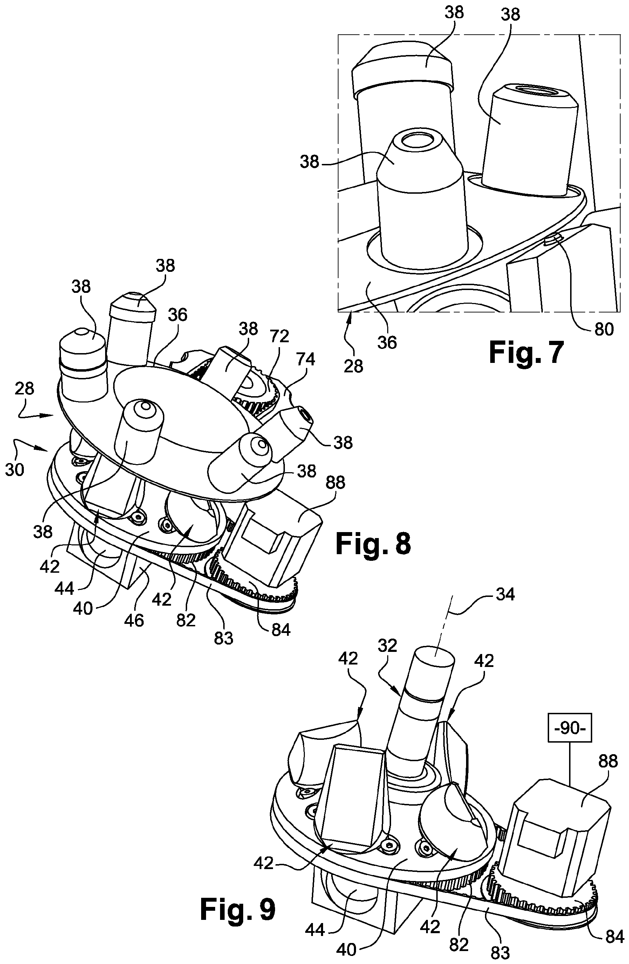

La figure 7 montre la coopération entre la périphérie externe du plateau 36 de la première tourelle 28 et le bâti 14 afin de réaliser une indexation en rotation de la première tourelle 28 sur le bâti 14 dans chacune de ses positions d'utilisation des objectifs 38. A cette fin, la périphérie externe comprend une pluralité de cavités concaves (non représentées) coopérant avec un poussoir à bille 80 porté par le bâti 14, la bille étant destinée à venir se loger dans une cavité concave du plateau 36 permettant ainsi de réaliser une retenue du plateau 36 de la première tourelle 28 dans une position active.

Le bord périphérique externe du plateau 40 de la seconde tourelle 30 comprend une denture 82 en prise avec une courroie 83, laquelle est également en prise avec une roue crantée 84 portée par un axe des moyens motorisés 88 reliés aux moyens de commande 90 qui sont également aptes à commander la mise en fonctionnement des moyens d'éclairage 92 comme cela apparaitra dans la suite de la description (figures 2, 8 et 9).

Chaque module de filtrage 42 comprend un boîtier tubulaire 94 d'axe 96 comportant une première ouverture 98 et une seconde ouverture 100 agencées aux extrémités du boîtier 94 tubulaire et traversées par l'axe 96 du boîtier 94 de l'élément de filtrage 42. La première ouverture 98 loge un filtre dichroïque 102 dont la propriété est d'être sélectif en réflexion et en transmission. Ainsi, un tel filtre dichroïque 102 est apte à réfléchir des longueurs d'ondes spécifiques et est apte à laisser passer d'autres longueurs d'ondes spécifiques. La seconde ouverture 100 loge un filtre d'émission ou filtre réjecteur 104 d'une longueur d'onde spécifique correspondant à la longueur d'onde d'excitation, plus particulièrement de la longueur d'onde d'excitation du module d'éclairage 92 associé. Le filtre dichroïque 102 de chaque module de filtrage 42 s'étend suivant un plan qui est incliné en oblique par rapport à l'axe 96 du boîtier 94 du module de filtrage 42. Le filtre d'émission 104 de chaque module de filtrage 42 s'étend suivant un plan qui est sensiblement perpendiculaire à l'axe 96 du boîtier 94. On notera qu'en position active d'utilisation l'axe 96 de chaque module de filtrage 42 est dans le trajet optique.

Egalement, chaque module de filtrage 42 comprend un épaulement annulaire 106 externe formant une butée de montage du module 42 dans une ouverture du plateau 40 (figure 11A). Chaque module 42 comprend des moyens d'indexage en rotation autour de l'axe 96 dans une ouverture du plateau 40 de la seconde tourelle 30 (figure 11B). Les moyens d'indexage comprennent une encoche 97 débouchant dans l'ouverture et dans laquelle est apte à venir s'engager une goupille 99 (figures 10 et 11B). Le plateau 40 comprend des moyens de blocage 108 du module dans une ouverture du plateau 40 de la seconde tourelle 30. Ces moyens de blocage comprennent deux vis 108 à tête excentrée, agencées de part et d'autre d'un module 42, et venant en appui par rotation sur le boîtier 94 du module 42.

Les moyens d'éclairage du microscope selon l'invention comprennent une pluralité de modules d'éclairage 92 portés par une platine 110 en forme d'arc de cercle solidaire du bâti 14 (figure 12). Les modules d'éclairage 92 sont positionnés de manière à émettre un faisceau de lumière d'éclairage incident en direction d'un module de filtrage 42 qui renvoie la lumière par son filtre dichroïque 102 vers un objectif 38 jusqu'à un échantillon. La lumière émise par l'échantillon traverse l'objectif puis le module de filtrage 42 et est réfléchie par la surface réfléchissante 44 portée par le socle 46 vers un détecteur 21 et ensuite affichée sur l'écran 12 de visualisation.

Les modules d'éclairage 92 sont configurés pour émettre des faisceaux de lumière dont les longueurs d'ondes sont différentes et chaque module d'éclairage 92 est associé à un unique module de filtrage 42. Ainsi, pour chaque couple donné associant un module d'éclairage 92 à un module de filtrage 42, on comprend que le filtre dichroïque 102 du module de filtrage 42 est apte à renvoyer la longueur d'onde du faisceau incident vers un objectif 38 jusqu'à un échantillon et que les propriétés de transmission du filtre dichroïque 102 permettent de transmettre la longueur d'onde émise par l'échantillon, le filtre d'émission 104 étant prévu pour absorber la lumière incidente.

Du fait de l'utilisation de modules d'éclairage 92 fixes, un module d'éclairage 92 et le module de filtrage 42 associé sont positionnés l'un par rapport à l'autre de manière à ce que le faisceau dudit module d'éclairage 92 soit renvoyé par le filtre dichroïque 102 dudit module de filtrage 42 vers un échantillon, lorsque ledit module de filtrage 42 et un objectif 38 sont dans une position active correspondant à une position d'utilisation. On comprend ainsi que les filtres dichroïques 102 des modules de filtrage 42 ne sont pas tous orientés de manière identique autour de l'axe de rotation 34 de la seconde tourelle 30.

L'utilisation de modules d'éclairage 92 fixes permet de les positionner de manière très précise sur le bâti 14, ce qui facilite l'orientation du faisceau de chacun des modules d'éclairage 92 vers les modules de filtrage 42. De plus, l'utilisation de modules d'éclairage 92, structurellement indépendants des modules de filtrage 42, permet de faciliter les interventions d'un utilisateur.

Dans l'exemple de réalisation représenté aux figures, le microscope 10 comprend quatre modules de filtrage 42 et quatre modules d'éclairage 92, un module d'éclairage 92 coopérant avec un module de filtrage 42 donné comme évoqué précédemment.

Chaque module d'éclairage 92 comprend un corps tubulaire 112 comportant une première extrémité 114 amont et une seconde extrémité 116 aval (figure 13). Ce corps tubulaire 112 est formé en une première partie 118 et une seconde partie 120. La première partie 118 et la seconde partie 120 ont une forme interne sensiblement cylindrique et définissent à leur jonction un épaulement annulaire. Le diamètre interne de la première partie est inférieur au diamètre interne de la seconde partie 120. La première extrémité 114 du corps 112 porte une source de lumière 126, du type à semi-conducteurs, solidaire d'un dissipateur thermique 128, la source de lumière 126 étant apte à émettre un faisceau en direction d'un diaphragme 130 logé dans la première partie 118 du corps 112. Le diaphragme 130 comporte une ouverture 132 tronconique s'évasant en direction de la seconde partie 120 du corps 112. Le diaphragme 130 est avantageusement formé d'une seule pièce avec la première partie 118 comme représenté en figure 13. Une lentille 134 convergente est engagée depuis la seconde extrémité 116 du corps 112 sur l'épaulement annulaire 122 de la seconde partie 120 du corps 112. Elle comprend une face amont 134A sensiblement plane et une face aval 134B convexe sur laquelle est appliqué un segment annulaire 136 ou entretoise d'un support 138 de filtre 140 passe-bande qui est serré par un organe élastique 142. L'entretoise 136 du support de filtre 138 comprend une surface annulaire 137 incurvée concave complémentaire de la portion de surface annulaire 139 incurvée convexe sur laquelle elle est destinée à venir en contact de manière à obtenir un appui surface contre surface. Un anneau 143 fendu d'arrêt axial de l'organe élastique est monté dans une gorge de la seconde extrémité 116 du corps 112 et bloque axialement l'organe élastique précontraint élastiquement. Comme représenté en figure 14, l'organe élastique 142 est une rondelle métallique présentant des ondulations selon l'axe de la rondelle en direction circonférentielle. Le segment annulaire 136 du support 138 de filtre est ainsi appliqué sur la face convexe 134B de la lentille 134 par l'organe élastique 142 précontraint élastiquement.

Le segment annulaire 136 du support 138 est relié vers l'aval à une jupe cylindrique 144 dont l'extrémité libre, c'est-à-dire opposée à la lentille 134 porte un filtre 140 passe-bande, dit d'excitation, permettant de sélectionner précisément la bande de longueurs de la source d'éclairage, sortant d'un module d'éclairage 92.

Le montage du filtre 140 sur une jupe cylindrique 144 entourée par un organe élastique 142 de maintien de l'entretoise 136 du support 138 et par l'anneau 143 d'arrêt de l'organe élastique 142 permet d'assembler les différents éléments du module d'éclairage 92 de manière simple et rapide tout en garantissant une compacité optimale du module d'éclairage 92.

Comme on peut le voir sur la figure 13, la périphérie radialement externe de la lentille 134 est engagée dans une gorge tronconique 146 à section s'évasant vers l'amont ou vers la première extrémité 114 du corps 112. Cette configuration permet de limiter les contraintes mécaniques appliquées au montage et au serrage sur la lentille 134.

Dans une réalisation non représentée aux figures, le microscope 10 selon l'invention pourrait être utilisé pour réaliser un éclairage en lumière blanche, cette lumière étant alors émise depuis le dessus de la table porte-objets au travers de l'échantillon. Un anneau de contraste de phase pouvant être intercalé entre la source et la table porte-objets.

Les moyens d'éclairage pourraient également être aptes à émettre un faisceau de lumière blanche en direction d'une lame séparatrice portée par la seconde tourelle. Les moyens d'éclairage peuvent ainsi comprendre alors un module d'éclairage spécifique porté par la platine qui coopère avec un module de filtrage donné portant dans une première ouverture la lame séparatrice.

## Revendications

1. Microscope (10) pour l'observation d'un échantillon comprenant une première tourelle (28) portant une pluralité d'objectifs (38) et une seconde tourelle (30) portant une pluralité de modules de filtrage (42), la première tourelle (28) et la seconde tourelle (30) étant portées par un même pivot (32) et montées à rotation, indépendamment l'une de l'autre, autour de ce pivot (32), chaque objectif (38) de la première tourelle (28) et chaque module de filtrage (42) de la seconde tourelle (30) étant aptes à être agencé par rotation de la première tourelle (28) et de la seconde tourelle (30) dans une position active dans laquelle un module de filtrage (42) de la seconde tourelle (30) est intercalé dans un trajet optique entre un objectif de la première tourelle (28) et un détecteur (21).

2. Microscope selon la revendication 1, dans lequel l'axe (34) est incliné en oblique par rapport à la verticale en position d'utilisation du microscope (10).

3. Microscope selon la revendication 2, dans lequel la seconde tourelle (30) est agencée en-dessous de la première tourelle (28).

4. Microscope selon l'une des revendications 1 à 3, dans lequel chaque tourelle (28, 30) est guidée en rotation autour du pivot (32) par deux paliers à roulements (50, 52, 54, 56) portés par le pivot (32).

5. Microscope selon la revendication 4, dans lequel la seconde tourelle (30) comprend un plateau (40) de support des modules de filtrage (42) monté autour des premier (50) et second (52) paliers de la seconde tourelle (30) et la première tourelle (28) comprend un plateau (36) de support des objectifs fixé sur un anneau (70) entourant les premier (54) et second (56) paliers associés.

6. Microscope selon l'une des revendications 1 à 5, dans lequel chaque module de filtrage (42) comprend un boîtier (94) comportant une première ouverture (98) et une seconde ouverture (100) de sorte que la lumière émise par l'échantillon traverse la première ouverture (98) puis la seconde ouverture (100), le boîtier (94) de chaque module de filtrage (42) portant un filtre dichroïque (102) agencé dans la première ouverture (98) et adapté pour réfléchir la lumière émise par des moyens d'éclairage (92) vers un objectif (38) et permettre à la lumière d'une longueur d'onde prédéterminée de passer au travers du filtre dichroïque (102).

7. Microscope selon la revendication 6, dans lequel chaque module de filtrage (42) comprend un filtre d'émission (104) apte à rejeter la longueur d'onde de la source de lumière, ce filtre d'émission (104) étant disposé dans la seconde ouverture (100).

8. Microscope selon l'une des revendications 1 à 7, dans lequel les moyens d'éclairage comprennent une pluralité de modules d'éclairage (92) fixes et configurés pour émettre des faisceaux de lumière dont les longueurs d'ondes sont différentes.

9. Microscope selon la revendication 6 et la revendication 8, dans lequel chaque module d'éclairage (92) est associé en fonctionnement à un unique module de filtrage (42), un module d'éclairage (92) et le module de filtrage (42) associé étant positionnés l'un par rapport à l'autre de manière à ce que le faisceau dudit module d'éclairage (92) soit renvoyé par le filtre dichroïque (102) dudit module de filtrage (42) associé vers un objectif (38) de la première tourelle (28), lorsque ledit module de filtrage (42) associé et l'objectif (38) sont dans une position active.

10. Microscope selon la revendication 8 ou 9, dans lequel les modules d'éclairage (92) sont positionnés sur une platine (110) en forme d'arc de cercle et qui est solidaire d'un bâti (14) du microscope (10).

11. Microscope selon l'une des revendications 8 à 10, dans lequel chaque module d'éclairage (92) comprend un corps tubulaire (112) comportant une source (126) de lumière à une première extrémité (114) et une lentille (134) engagée depuis une seconde extrémité (116) opposée à la première extrémité (114) sur un épaulement annulaire (122) interne du corps (112), un support (138) de filtre (140) étant serré sur la lentille (134) par un organe élastique (142) précontraint axialement et bloqué axialement par un anneau d'arrêt de la seconde extrémité (116) du corps (112).

12. Microscope selon l'une des revendications précédentes, dans lequel la seconde tourelle (30) est commandée en rotation par des moyens motorisés (88) actionnés par des moyens de commande (90) de la mise en position active d'un module de filtrage (42), ces moyens de commande étant aptes à mettre en fonctionnement un module d'éclairage (92) donné.

13. Microscope selon l'une des revendications précédentes, dans lequel une molette (74) rotative est couplée en rotation à la première tourelle (28), par exemple par une courroie de transmission (70).

14. Microscope selon l'une des revendications précédentes, dans lequel chaque module de filtrage (42) est monté de manière amovible sur la seconde tourelle (30).

15. Microscope selon l'une des revendications précédentes, **caractérisé en ce qu'**il comprend une table (22) porte-échantillon disposée au-dessus de la première tourelle (28).

## Patentansprüche

1. Mikroskop (10) für die Beobachtung einer Probe, umfassend einen ersten Revolver (28), der eine Vielzahl von Objektiven (38) trägt, und einen zweiten Revolver (30), der eine Vielzahl von Filtermodulen (42) trägt, wobei der erste Revolver (28) und der zweite Revolver (30) durch ein gleiches Drehgelenk (32) getragen und unabhängig voneinander drehbar um dieses Drehgelenk (32) montiert sind, wobei jedes Objektiv (38) des ersten Revolvers (28) und jedes Filtermodul (42) des zweiten Revolvers (30) in der Lage ist, durch Drehung des ersten Revolvers (28) und des zweiten Revolvers (30) in einer aktiven Position angeordnet zu werden, in der ein Filtermodul (42) des zweiten Revolvers (30) in einem optischen Pfad zwischen einem Objektiv des ersten Revolvers (28) und einem Detektor (21) eingefügt ist.

2. Mikroskop nach Anspruch 1, wobei die Achse (34) bezogen auf die Vertikale in Verwendungsposition des Mikroskops (10) schräg geneigt ist.

3. Mikroskop nach Anspruch 2, wobei der zweite Revolver (30) unter dem ersten Revolver (28) angeordnet ist.

4. Mikroskop nach einem der Ansprüche 1 bis 3, wobei jeder Revolver (28, 30) durch zwei durch das Drehgelenk (32) getragene Wälzlager (50, 52, 54, 56) drehend um das Drehgelenk (32) geführt wird.

5. Mikroskop nach Anspruch 4, wobei der zweite Revolver (30) ein Stützplateau (40) der Filtermodule (42) umfasst, das um das erste (50) und zweite (52) Lager des zweiten Revolvers (30) herum montiert ist, und der erste Revolver (28) ein Stützplateau (36) der Objektive umfasst, die auf einem Ring (70), das assoziierte erste (54) und zweite (56) Lager umgebend, befestigt sind.

6. Mikroskop nach einem der Ansprüche 1 bis 5, wobei jedes Filtermodul (42) ein Gehäuse (94) umfasst, beinhaltend eine erste Öffnung (98) und eine zweite Öffnung (100), sodass das von der Probe emittierte Licht die erste Öffnung (98), danach die zweite Öffnung (100) durchquert, wobei das Gehäuse (94) von jedem Filtermodul (42) einen dichroitischen Filter (102) trägt, in der ersten Öffnung (98) angeordnet und angepasst, um das durch die Beleuchtungsmittel (92) in Richtung eines Objektivs (38) emittierte Licht zu reflektieren und dem Licht einer vorher festgelegten Wellenlänge zu erlauben, durch den dichroitischen Filter (102) hindurch zu gelangen.

7. Mikroskop nach Anspruch 6, wobei jedes Filtermodul (42) einen Emissionsfilter (104) umfasst, der in der Lage ist, die Wellenlänge der Lichtquelle zurückzuwerfen, wobei dieser Emissionsfilter (104) in der zweiten Öffnung (100) angebracht ist.

8. Mikroskop nach einem der Ansprüche 1 bis 7, wobei die Beleuchtungsmittel eine Vielzahl von festen Beleuchtungsmodulen (92) umfassen und zum Emittieren von Lichtstrahlen konfiguriert sind, von denen die Wellenlängen sich unterscheiden.

9. Mikroskop nach Anspruch 6 und Anspruch 8, wobei jedes Beleuchtungsmodul (92) einem einzelnen Filtermodul (42) funktionsfähig assoziiert ist, wobei ein Beleuchtungsmodul (92) und das assoziierte Filtermodul (42) zueinander auf eine Weise positioniert sind, dass der Strahl des Beleuchtungsmoduls (92) durch den dichroitischen Filter (102) des assoziierten Filtermoduls (42) in Richtung eines Objektivs (38) des ersten Revolvers (28) zurück geschickt wird, wenn das assoziierte Filtermodul (42) und das Objektiv (38) sich in einer aktiven Position befinden.

10. Mikroskop nach Anspruch 8 oder 9, wobei die Beleuchtungsmodule (92) auf einer Trägerplatte (110) positioniert sind, die bogenkreisförmig und die mit einem Gestell (14) des Mikroskops (10) einstückig ist.

11. Mikroskop nach einem der Ansprüche 8 bis 10, wobei jedes Beleuchtungsmodul (92) einen röhrenförmigen Körper (112) umfasst, beinhaltend eine Lichtquelle (126) an einem ersten Ende (114) und eine ab einem zweiten, dem ersten Ende (114) gegenüberliegenden, Ende (116) auf einer internen ringförmigen Schulter (122) des Körpers in Eingriff stehende Linse (134), wobei ein Träger (138) von Filter (140) durch ein axial vorgespanntes elastisches Element (142) auf der Linse (134) eingespannt und axial durch einen Anschlagring des zweiten Endes (116) des Körpers (112) blockiert ist.

12. Mikroskop nach einem der vorstehenden Ansprüche, wobei der zweite Revolver (30) durch Antriebsmittel (88) drehend gesteuert wird, die durch Steuerungsmittel (90) betätigt werden, die ein Filtermodul (42) in die aktive Position bringen, wobei diese Steuerungsmittel in der Lage sind, ein gegebenes Beleuchtungsmodul (92) in Betrieb zu nehmen.

13. Mikroskop nach einem der vorstehenden Ansprüche, wobei ein drehbares Stellrad (74) drehbar mit dem ersten Revolver (28) gekoppelt ist, zum Beispiel durch einen Treibriemen (70).

14. Mikroskop nach einem der vorstehenden Ansprüche, wobei jedes Filtermodul (42) auf entfernbare Weise auf dem zweiten Revolver (30) montiert ist.

15. Mikroskop nach einem der vorstehenden Ansprüche, **dadurch gekennzeichnet, dass** es einen über dem ersten Revolver (28) angebrachten Probenträgertisch (22) umfasst.

## Claims

1. Microscope (10) for observing a sample comprising a first turret (28) bearing a plurality of lenses (38) and a second turret (30) bearing a plurality of filtering modules (42), the first turret (28) and the second turret (30) being borne on the same pivot (32) and mounted to rotate, independently of each other, about this pivot (32), each lens (38) of the first turret (28) and each filtering module (42) of the second turret (30) being able to be arranged by rotation of the first turret (28) and of the second turret (30) into an active position wherein a filtering module (42) of the second turret (30) is inserted into an optical path between a lens of the first turret (28) and a detector (21).

2. Microscope according to claim 1, wherein the axis (34) is obliquely inclined with respect to the vertical in a position of use of the microscope (10).

3. Microscope according to claim 2, wherein the second turret (30) is arranged below the first turret (28).

4. Microscope according to one of claims 1 to 3, wherein each turret (28, 30) is guided in rotation about the pivot (32) by two roller bearings (50, 52, 54, 56) borne by the pivot (32).

5. Microscope according to claim 4, wherein the second turret (30) comprises a support plateau (40) of the filtering modules (42) mounted around the first (50) and second (52) bearings of the second turret (30) and the first turret (28) comprises a lens support plateau (36) fastened on a ring (70) that surrounds the associated first (54) and second (56) bearings.

6. Microscope according to one of claims 1 to 5, wherein each filtering module (42) comprises a case (94) comprising a first opening (98) and a second opening (100) in such a way that the light emitted by the sample passes through the first opening (98) then the second opening (100), the case (94) of each filtering module (42) bearing a dichroic filter (102) arranged in the first opening (98) and adapted to reflect the light emitted by lighting means (92) to a lens (38) and allow the light of a predetermined wavelength to pass through the dichroic filter (102).

7. Microscope according to claim 6, wherein each filtering module (42) comprises an emission filter (104) able to reject the wavelength of the light source, this emission filter (104) being disposed in the second opening (100).

8. Microscope according to one of claims 1 to 7, wherein the lighting means comprises a plurality of lighting modules (92) fastened and configured to emit beams of light of which the wavelengths are different.

9. Microscope according to claim 6 and claim 8, wherein each lighting module (92) is associated in operation with a unique filtering module (42), a lighting module (92) and the associated filtering module (42) being positioned in relation to one another in such a way that the beam of said lighting module (92) is returned by the dichroic filter (102) of said associated filtering module (42) to a lens (38) of the first turret (28), when said associated filtering module (42) and the lens (38) are in an active position.

10. Microscope according to claim 8 or 9, wherein the lighting modules (92) are positioned on a plate (110) in shape of an arc of a circle and which is integral with a frame (14) of the microscope (10).

11. Microscope according to one of claims 8 to 10, wherein each lighting module (92) comprises a tubular body (112) comprising a light source (126) at a first end (114) and a lens (134) engaged from a second end (116) opposite the first end (114) on an inner annular shoulder (122) of the body (112), a filter (140) support (138) being tightened on the lens (134) by an axially pre-stressed elastic member (142) and axially blocked by a retaining ring of the second end (116) of the body (112).

12. Microscope according to one of the preceding claims, wherein the second turret (30) is controlled in rotation by motorised means (88) actuated by means of controlling (90) the active position of a filtering module (42), the control means being able to set into operation a given lighting module (92).

13. Microscope according to one of the preceding claims, wherein a rotating scroll wheel (74) is coupled in rotation to the first turret (28), for example by a transmission belt (70).

14. Microscope according to one of the preceding claims, wherein each filtering module (42) is removably mounted on the second turret (30).

15. Microscope according to one of the preceding claims, **characterised in that** it comprises a sample holder table (22) disposed above the first turret (28).
